# EUROPEAN PATENT APPLICATION

(11) **EP 3 034 350 A1**
(43) Date of publication of application: **22.06.2016**
(21) Application number: 14198415.3
(22) Date of filing: 17.12.2014
(51) Int. Cl.: B60L 3/00, B60L 3/04, B60L 11/18

(54) **Safety method for use in charging electric vehicles**

(71) Applicant: Delphi Technologies, Inc., Troy MI 48007 (US)
(72) Inventor: Rutkowski, Daniel, 33813 Oerlinghausen (DE); Hermes, Dominik, 42279 Wuppertal (DE)
(74) Representative: Delphi France SAS

(57) **Abstract**

A method of determining whether the PE line of an electrical vehicle supply equipment (EVSE) has become disconnected during charging of an electrical vehicle from a supply, comprising: i) detecting the current flowing thought the Pilot line or the Pulse Width Modulator f the EVSE; ii) comparing the current from i) with a pre-determined threshold; and iii) determining a a fault if the detected current is above said threshold.

## Description

### Field of the Invention

This disclosure relates to charging of electric vehicles and has particular application to the use of electrical vehicle supply equipment (EVSE).

### Background of the Invention

Electric and hybrid vehicles are becoming more and more common. Such vehicles include a battery that is used to drive electric motors with electric energy. The battery needs to be charged from a mains source i.e. grid. The interconnection equipment between the vehicle and the grid is called an ESVE. Such an EVSE is described in international standard IEC 61851. In these standard are specified AC current charging methods including mode 2 (portable charging cable) and Mode 3 (charging station). Both charging modes include several electric safety features and charging current control.

To charge an electric car there is a requirement to to have a communication line to the car to state the maximum charge current the car is allowed to take.

EVSEs include a PWM signal that goes through the pilot line to the car. The ground line of this is referred to as protective earth (PE). The current loop is closed over the internal circuit of the car from pilot to the PE. In normal operation the current floats from the EVSE through the Pilot and comes back through the EVSE through the PE line to the EVSE. The EVSE has an internal measurement that checks the voltage level of the PWM.

If there is a fail in the PE line e.g. a disconnection, the vehicle is insulated from ground the circuit is not closed anymore, so the operation of the PWM becomes out of range and the EVSE shuts off charging.

In some cases however it is possible that the vehicle is well grounded such that current can flow from the vehicle to earth. In this condition the PMW current floats through ground over the supply back to the EVSE so the EVSE is not able to detect that the protective earth is disconnected.

It is an object of the invention to overcome this problem.

### Statement of the Invention

In one aspect is provided a method of determining whether the earth line of an electrical vehicle supply equipment (EVSE) has become disconnected during charging of an electrical vehicle from a supply, comprising: i) detecting the current flowing thought a pilot line or Pulse Width Modulator of the EVSE; ii) comparing the current from i) with a pre-determined threshold; and, iii) determining a fault if the detected current is above said threshold.

Preferably step i) uses the existing Residual Current Device sensor of the EVSE.

Preferably said current used in said comparison step is detected at pre-determined times.

### Brief Description of Figures

Figures 1 shows a schematic diagrams of an the electric vehicle, mains and an EVSE;
Figure 2 shows more detailed circuitry of the EVSE;
Figure 3 and 4 shows alternative scenarios where the earth (PE) line to the EVSE becomes disconnected;
Figure 5 shows a schematic example of the invention

### Description of Invention

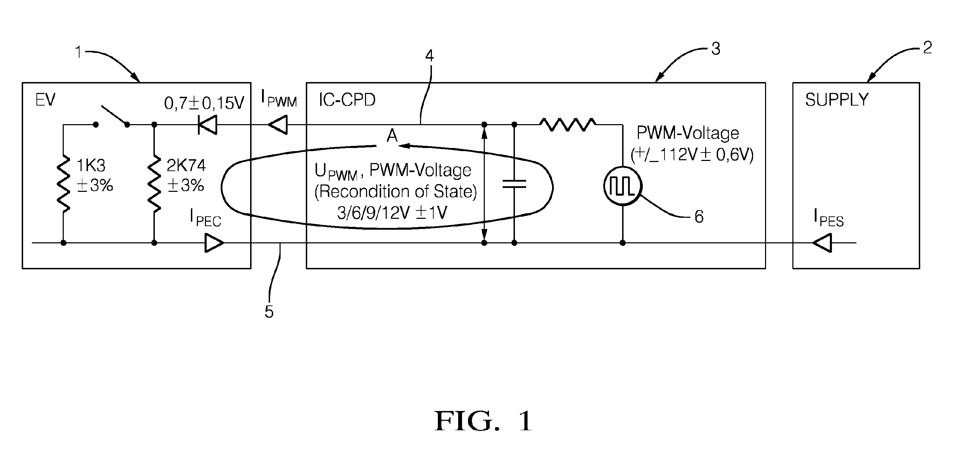

Figures 1 shows a schematic diagrams of an the electric vehicle 1, mains (grid) supply 2 and an EVSE 3. The EVSE includes a pilot line 4 which is used to send (e.g. control) signals to the vehicle and a PE (earth) line 5. Figure 1 is a schematic simplification of the actual circuitry in order to explain aspects of the invention.

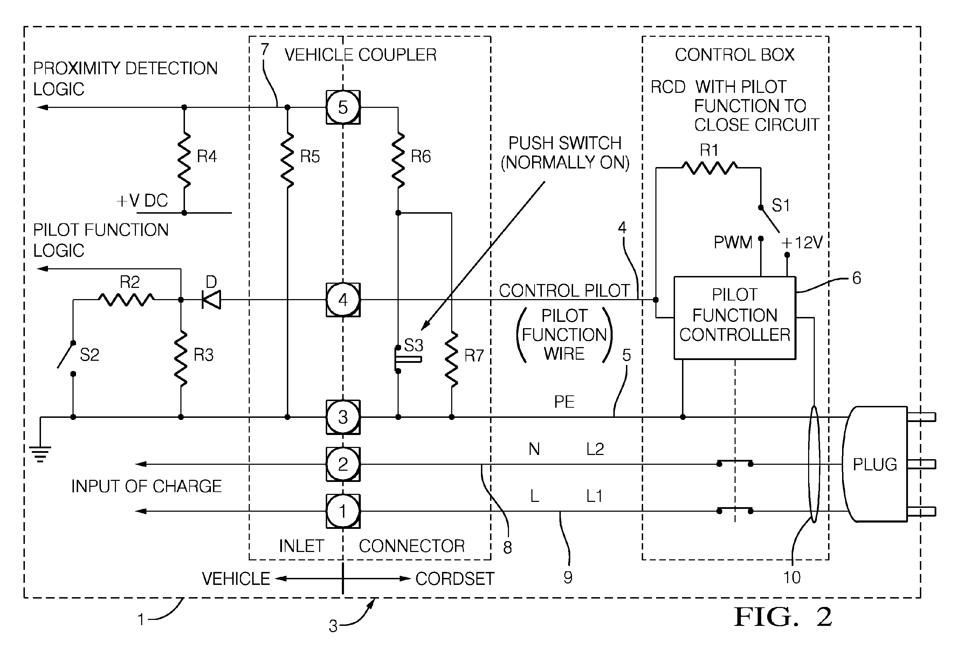

Figure 2 shows more detailed circuitry of the EVSE. Certain circuitry of the EVSE is omitted from figure 1 for clarity purposes. Similar components have the same reference numerals.

The supply 2 is connected to the grid or mains. There is a connection means to connect to the EVSE. The EVSE includes a pilot line, as mentioned from a Pulse Width Modulator PWM 6 which provides generally control signals to the vehicle. The EVSE has connection means to the electric vehicle which includes the pilot line as well as a proximity detection logic line 7. The charging is performed via the main charging lines of neutral earth 8 and live 9 which are omitted from figures 1.

Figure 1 shows normal operation during the recharging process. In this instance current flows through the pilot line to the vehicle and back via the PE line forming a closed loop as shown by arrow A. The current through the pilot line (I_{pmw}) is equal to the current through the PE line I_{pec}. The charging proceeds OK.

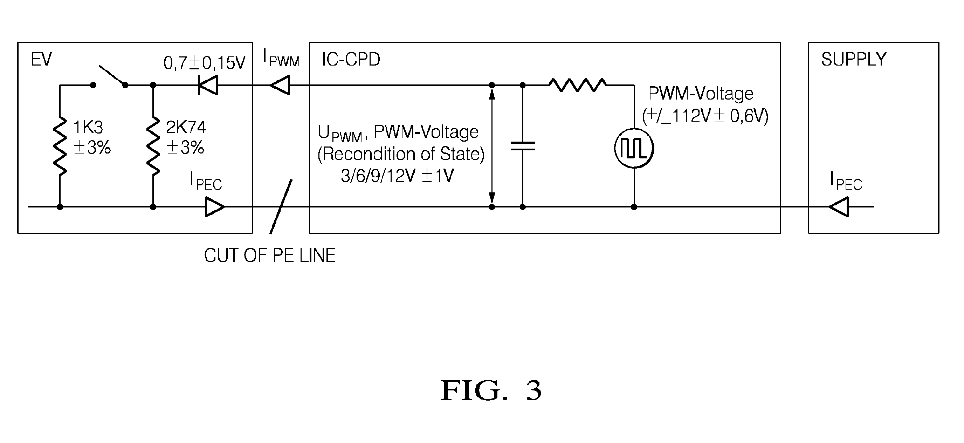

Figure 3 shows the scenario where the PE line 5 is disconnected. Current cannot flow back through the PE line. The current through the pilot line I_{pmw} is not equal to the current through the PE line I_{pec}. When the PWM signal I_{pwm} current is not able to return via the PE line to the EVSE it floats through the ground (and eventually effectively flows from ground via the supply to the EVSE). Normally the PWM signal under such circumstances becomes out of range and this is detected and indicated.

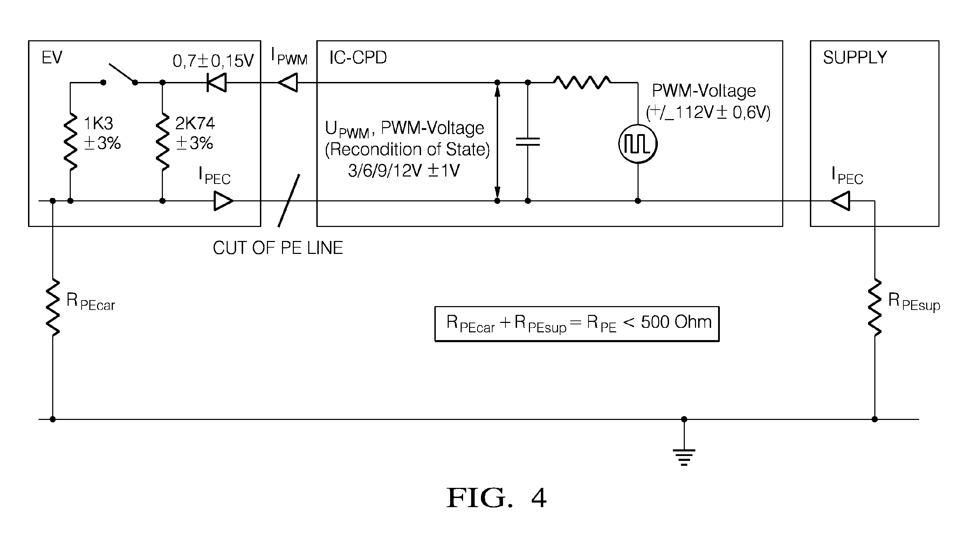

Figure 4 is similar to figure 3 but includes a nominal resistance to earth of the vehicle charge system R_{pecar} and resistance to earth of the supply R_{pesupply}. If the combined resistance R_{pecar} and R_{pesupply} is large then as mentioned, the PWM signals becomes out of range, and this is detected.

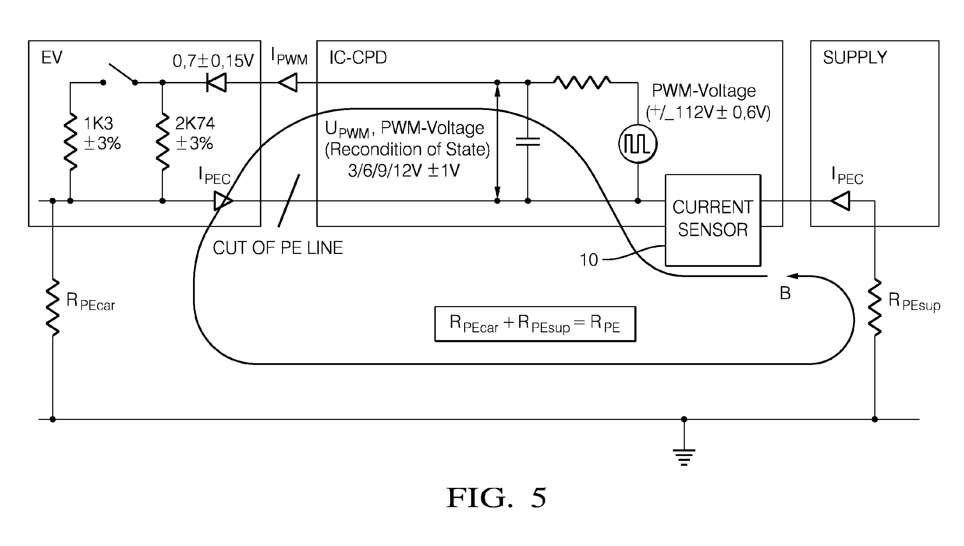

However if the combined resistance R_{pecar} and R_{pesupply} is low (e.g. less than 500 Ohm) then sufficient current will flow through the earths as shown by arrow B as shown in figure 5. In this case the PMW signal is within range and there is no indication of a fault i.e. that the PE line has become is disconnected. So for example if the combined resistance of R_{pecar} and R_{pesupply} are lower than 500 Ohms then relatively high current flows through the pilot line back via the vehicle to earth and from earth via the supply to the pilot line in the EVSE. The current through the supply is equal to the current in the pilot I_{pmw} and as long as the PMW current is not out of range, the charging continues as normal.

According to one aspect, is provided current sensing means to detect the current through the PMW to detect if there is a disconnect in the earth line.

In many EVSEs there is a current measurement sensor already fitted for use with Residual Current Device (RCD) functionality as shown by reference numeral 10. In one embodiment this sensor is used also for the purpose of detecting the current through the PMW generator and/or Pilot line. This sensor typically spans the Earth, Live and Pilot lines.

When a disconnect occurs in the PE line, the floating current flows though the sensor and the internal control circuitry detect this signal current and then consequentially shut off the system. When the PE is connected to the vehicle the current floats normally through the PE line. With respect to the sensor the signal (current) is not present in the normal operating phase. It is to be noted that in this normal operation the live and neutral lines have a net current of zero as they cancel each other out and so only the Pilot line current is detected. So although the current through the PMW is in range but the current signal is detected in the sensor. Thus a charging interrupt is generated.

As the signal of the PWM has a quite low current (maximum 6mA) this is quite low for the sensor to detect. Due to the waveform of the PMW signal, in a preferred embodiment, the current is detected at certain times i.e. in a specific time frame. Various filtering can be used to make detection of the PWM signal easier.

## Claims

1. A method of determining whether the earth line of an electrical vehicle supply equipment (EVSE) has become disconnected during charging of an electrical vehicle from a supply, comprising:
i) detecting the current flowing thought a pilot line or Pulse Width Modulator of the EVSE;
ii) comparing the current from i) with a pre-determined threshold; and,
iii) determining a fault if the detected current is above said threshold.

2. A method as claimed in claim 1 wherein step i) uses the existing Residual Current Device sensor of the EVSE.

3. A method as claimed in claim 1 or 2 wherein said current used in said comparison step is detected at pre-determined times.
